# EUROPÄISCHE PATENTSCHRIFT

(11) **EP 1 864 115 B1**
(45) Veröffentlichungstag und Bekanntmachung des Hinweises auf die Patenterteilung: **08.10.2008**
(21) Anmeldenummer: 06723692.7
(22) Anmeldetag: 24.03.2006
(51) Int. Cl.: G01N 21/64, G02B 21/00

(54) **VERFAHREN ZUR MIKROSKOPISCHEN UNTERSUCHUNG EINER RÄUMLICHEN FEINSTRUKTUR**
METHOD FOR THE MICROSCOPIC ANALYSIS OF A THREE-DIMENSIONAL MICROSTRUCTURE
PROCEDE D'EXAMEN MICROSCOPIQUE D'UNE STRUCTURE FINE SPATIALE

(30) Priorität: 26.03.2005 DE 102005013969
(43) Veröffentlichungstag der Anmeldung: 12.12.2007
(73) Patentinhaber: Max-Planck-Gesellschaft zur Förderung der Wissenschaften e.V. Berlin, 80539 München (DE)
(72) Erfinder: HELL, Stefan, 37085 Göttingen (DE); WESTPHAL, Volker, 30161 Hannover (DE); QUAAS, Norbert, 28209 Bremen (DE)
(74) Vertreter: Rehberg Hüppe + Partner
(86) Internationale Anmeldenummer: PCT/EP2006/002711
(87) Internationale Veröffentlichungsnummer: WO 2006/103025

(56) Entgegenhaltungen:
- DE-A1- 10 154 699
- US-A- 5 254 477
- US-B1- 6 259 104

## Beschreibung

Verfahren zur mikroskopischen Untersuchung einer räumlichen Feinstruktur mit den Schritten des Oberbegriffs des Patentanspruchs 1. Bei der Feinstruktur kann es sich insbesondere um eine künstliche, d.h. von Menschenhand hergestellte Feinstruktur handeln. Zum Beispiel kann die räumliche Feinstruktur lithographisch erzeugt sein.

Unter einer Feinstruktur im Sinne der vorliegenden Beschreibung sind insbesondere Mikrostrukturen und Nanostrukturen, d. h. Strukturen mit Detailabmessungen im Mikrometer und Nanometerbereich zu verstehen.

### STAND DER TECHNIK

Ein Verfahren mit den Schritten des Oberbegriffs des Patentanspruchs 1 wird bei der Herstellung von elektronischen Halbleiterbauteilen zur Überprüfung feiner Leiterstrukturen oder Isolatorstrukturen angewendet. Dabei wird die jeweilige Feinstruktur mit einer elektrisch leitenden Substanz, in der Regel Aluminium, bedampft und dann elektronenmikroskopisch untersucht. Die Elektronenmikroskopie wird eingesetzt, um die Feinstruktur möglichst hoch räumlich aufzulösen. Der für die elektronenmikroskopische Untersuchung zu betreibende Aufwand ist jedoch beträchtlich. Das Objekt mit der Feinstruktur muss in der Regel schon für das Bedampfen mit dem oxidationsempfindlichen Aluminium in eine Hochvakuumapparatur eingebracht werden, die elektronenmikroskopische Untersuchung kann in jedem Fall nur unter Hochvakuum durchgeführt werden. Dies bedeutet, dass aus dem Objekt mit der Feinstruktur keine flüchtigen Stoffe austreten dürfen, die das Hochvakuum beeinträchtigen und/oder die Hochvakuumapparatur beschädigen könnten. Auch der Aufwand für die Installation und den Betrieb eines Elektronenmikroskops selbst ist recht hoch. Zudem ist als nachteilig anzusehen, das die elektronenmikroskopisch untersuchten Feinstrukturen aufgrund, der irreversiblen Belegung mit Aluminium zu verwerfen sind. D. h., dass das bekannte Verfahren nicht angewandt werden kann, um eine Feinstruktur zu überprüfen, die als solche auch bei einem Endprodukt vorhanden ist. Es sind vielmehr ausschließlich verlorene Stichproben möglich.

Derzeit werden nur wenige Alternativen zu einer elektronenmikroskopischen Untersuchung bei Verfahren zur Herstellung lithographischer Feinstrukturen gesehen, wenn eine Auflösung im Bereich von unter 150 nm erzielt werden soll. Aktuelle Leiterbahnen in der Mikroelektronik weisen bereits Breiten bis hinab zu 90 nm bei noch schmaleren Leitungsabständen auf. Bei erkennbaren Alternativen zur Elektronenmikroskopie handelt es sich um Verfahren, bei denen die zu untersuchende Feinstruktur mit einer Sonde abgetastet wird. Hierzu zählen die Atomic Force Mikroskopie (AFM) und die Scanning Nearfield Optical Mikroskopie (SNOM), die zwar kein Hochvakuum, aber eine exakte und daher aufwändige Ausrichtung der gereinigten Feinstruktur gegenüber der empfindlichen Anordnung zum Verfahren der jeweiligen Sonde erfordern und bezogen auf die Größe der untersuchten Feinstruktur extrem langsam sind. Der Aufwand der mikroskopischen Untersuchung bei dem bekannten Verfahren erscheint demnach nur dadurch signifikant reduzierbar zu sein, dass nur wenige Stichproben der lithographisch erzeugten Feinstrukturen untersucht werden. Dies erhöht aber die Gefahr fehlerhaft produzierter elektrischer Bauteile ganz erheblich.

Ein Verfahren zur fluoreszenzmikroskopischen Untersuchung einer Probe ist beispielsweise aus der DE 101 54 699 A1 bekannt. Ein Fluoreszenzfarbstoff, mit dem interessierende Strukturen innerhalb einer Probe in einem davor liegenden Schritt eingefärbt wurde(n), wird zunächst mit einem anregenden optischen Signal in einen angeregten energetischen Zustand gebracht. Bei dieser optischen Anregung gilt die übliche Grenze für die räumliche Auflösung bei optischen Verfahren von λ/(2n sinα), wobei λ die Wellenlänge des eingesetzten Lichts, n der Brechungsindex der Probe und α der Halbaperturwinkel des eingesetzten Objektivs ist. Um diese Grenze zu unterschreiten, wird der optisch angeregte Zustand des Fluoreszenzfarbstoffs mit einem abregenden optischen Signal bis auf einen gewünschten Messpunkt, in dem das abregende optische Signal eine Nullstelle aufweist, wieder abgeregt; d.h. mit dem abregenden optischen Signal wird der Fluoreszenzfarbstoff in der Probe überall außerhalb des Messpunkts zu stimulierter Emission gezwungen. Die Abmessungen des resultierenden fluoreszierenden Messpunkts, d.h. die räumliche Auflösung der verbleibenden Fluoreszenz, kann deutlich unter die übliche optische Auflösungsgrenze abgesenkt werden, indem das abregende optische Signal außerhalb des gewünschten Messpunkts mit einer solchen Intensität auf die Probe aufgebracht wird, dass eine Sättigung bei der Abregung durch stimulierte Emission erreicht wird. So befindet sich der Fluoreszenzfarbstoff in der Probe nur noch in einem sehr eng begrenzten Bereich um die Nullstelle der Intensitätsverteilung des abregenden optischen Signals in dem angeregten Zustand und kann nur in diesem Bereich fluoreszieren.

Gemäß Hell, Nature Biotechn., 21, 1347-1355, verhält sich die Größe des fluoreszierenden Messpunkts Δx und damit die Auflösung gemäß Δx ≅λ/(2n sinα√(I/Iₛ)), wobei λ die Wellenlänge des abregenden optischen Signals, n der Brechungsindex der Probe, α der Halbaperturwinkel des eingesetzten Objektivs, I die eingestrahlte Intensität des abregenden optischen Signals und Iₛ die Sättigungsintensität ist. Die Sättigungsintensität Iₛ ist die charakteristische Intensität, bei der der Fluoreszenzfarbstoff in der Probe durch die Einwirkung des abregenden optischen Signals statistisch gesehen zur Hälfte abgeregt ist.

Die US 6,259,104 B1 beschreibt ein konfokales Lasermikroskop, das nach demselben Prinzip arbeitet, das auch aus der DE 101 54 699 A1 bekannt ist. Weiterhin wird ein analoges photolithographisches Verfahren beschrieben, bei dem eine Substanz einerseits mit einem anregenden optischen Signal in einen angeregten energetischen Zustand gebracht wird, aber andererseits außerhalb einer gewünschten Struktur mit einem abregenden optischen Signal wieder abgeregt wird. Hierdurch soll die räumliche Auslösung bei der photolithographischen Erzeugung der räumlichen Struktur erhöht werden.

Aus der US 5,254,477 sind konjugierte Zusammensetzungen und Verfahren zum Detektieren eines interessierenden Analyts in einer flüssigen Probe bekannt. Die Detektion basiert auf einem intramolekularen Energietransfer zwischen einem konjugierten Fluorophor und einem chromophoren Licht-absorbierenden Liganden, spezieller auf der Fähigkeit des absorbierenden Liganden, Energie zu absorbieren, die strahlungslos von dem Fluorophor übertragen wird, wenn er in angeregtem Zustand ist. Durch den strahlungslosen Energietransfer auf den absorbierenden Ligand reduziert sich das von dem Fluorophor aufgrund seiner Anregung emittierte Licht. Soweit der absorbierende Ligand empfindlich gegenüber dem interessierenden Analyt ist, beeinflusst er über diese Empfindlichkeit die Intensität des von dem Fluorophor emittierten Fluoreszenzlichts.

### AUFGABE DER ERFINDUNG

Der Erfindung liegt die Aufgabe zugrunde, ein Verfahren zur mikroskopischen Untersuchung einer räumlichen Feinstruktur mit den Schritten des Oberbegriffs des Patentanspruchs 1 aufzuzeigen, das grundsätzlich weniger aufwändig in seiner Umsetzung ist und es daher beispielsweise bei der Herstellung von Feinstrukturen erlaubt, mehr der Feinstrukturen mikroskopisch zu untersuchen.

### LÖSUNG

Die Aufgabe der Erfindung wird durch ein Verfahren zur mikroskopischen Untersuchung einer räumlichen Feinstruktur mit den Schritten des unabhängigen Patentanspruchs 1 gelöst. Vorteilhafte Ausführungsformen des neuen Verfahrens sind in den Unteransprüchen 2 bis 10 definiert.

### BESCHREIBUNG DER ERFINDUNG

Bei dem neuen Verfahren zur mikroskopischen Untersuchung einer räumlichen Feinstruktur wird als Hilfssubstanz ein Luminophor ausgewählt, der zwei Zustände aufweist, die sich in

Bezug auf ihre Lumineszenzeigenschaften unterscheiden, wobei der Luminophor reversibel, aber im Wesentlichen vollständig durch ein optisches Signal von dem einen in den anderen Zustand überführbar ist. Zum Bestimmen des Verlaufs der mit dem Luminophor belegten Oberfläche wird dann von dem Luminophor emittiertes Lumineszenzlicht gemessen, wobei der Luminophor in der Umgebung jedes aktuell betrachteten Messpunkts in den anderen seiner beiden Zustände überführt wird.

Als Luminophor zur Verwendung bei dem neuen Verfahren sind vor allem, aber nicht ausschließlich Fluoreszenzfarbstoffe geeignet. Der hinter der Lumineszenz des Luminophors stehende physikalische Vorgang ist nicht entscheidend; es muss sich nicht um Fluoreszenz handeln. Wenn im Folgenden auf einen Fluoreszenzfarbstoff als Beispiel für den Luminophor zur Verwendung bei dem neuen Verfahren näher eingegangen wird, so ist auch dies nicht so zu verstehen, dass die in dem jeweiligen Zusammenhang gemachten Aussagen nur auf einen Fluoreszenzfarbstoff zutreffen. Vielmehr ist der Begriff Fluoreszenzfarbstoff, soweit sich aus dem konkreten Zusammenhang nichts anderes ergibt, als Synonym für den Begriff Luminophor zu verstehen. Dasselbe gilt für Fluoreszenzlicht als Beispiel für Lumineszenzlicht.

Das Messen von Lumineszenzlicht, das von dem Luminophor emittiert wird, erfolgt bei dem neuen Verfahren zur mikroskopischen Untersuchung der räumlichen Feinstruktur. D.h., es handelt sich um ein Vorgehen, das auch als Lumineszenzmikroskopie bezeichnet werden kann. Als konkretes Beispiel hierfür wird im Folgenden auf die Fluoreszenzmikroskopie verwiesen werden, wobei aber entsprechendes gilt wie oben in Bezug auf den Fluoreszenzfarbstoff als Beispiel für den Luminophor: Der Begriff der Fluoreszenzmikroskopie bzw. des fluoreszenzmikroskopischen Untersuchens ist hier, soweit sich aus dem konkreten Zusammenhang nichts anderes ergibt, als Synonym für das Messen von Lumineszenzlicht von dem Luminophor mit räumlicher Auflösung zu verstehen.

In der Fluoreszenzmikroskopie gibt es verschiedene als solche bekannte Maßnahmen, um die räumliche Auflösung so zu steigern, dass sie für die Untersuchung der künstlichen Feinstrukturen ausreichend hoch ist, die derzeit und in absehbarer Zukunft von kommerziellem Interesse sind. Dabei ist beispielsweise an eine so genannte konfokale Anordnung bei der fluoreszenzmikroskopischen Untersuchung zu denken, aber auch an eine Mehrphotonenanregung des Fluoreszenzfarbstoffs, um die räumliche Zuordnung des aufgefangenen bzw. erzeugten Fluoreszenzlichts zu einem bestimmten Messpunkt zu verbessern. Derartige Maßnahmen können auch bei dem neuen Verfahren ergriffen werden.

In jedem Fall jedoch wird der Luminophor bei dem neuen Verfahren so ausgewählt, dass er zwei Zustände aufweist, die sich in Bezug auf ihre Lumineszenzeigenschaften unterscheiden, wobei der Luminophor reversibel, aber im Wesentlichen vollständig durch ein optisches Signal von dem einen in den anderen Zustand überführbar ist. Damit wird es möglich, den Luminophor mit dem optischen Signal außerhalb eines räumlichen Bereichs, dessen Abmessung die übliche Grenze für die räumliche Auflösung bei optischen Verfahren von λ/(2n sinα) unterschreitet, in einen Zustand überführt werden, in dem sich die Lumineszenzeigenschaften des Luminosphors von denjenigen innerhalb des Bereichs unterscheiden. Dies erlaubt es, das Lumineszenzlicht von dem Luminophor mit einer räumlichen Auflösung besser als λ/(2n sinα) zu messen, wobei λ die Wellenlänge des optischen Signals zum Überführen des Luminophors von dem einen in den anderen Zustand ist. Von einer im Wesentlichen vollständigen Überführung des Luminophors von seinem einen in seinen anderen Zustand kann dann gesprochen werden, wenn mindestens 80 %, vorzugsweise mindestens 90 %, mehr bevorzugt mindestens 96 % und am meisten bevorzugt mindestens 99 % des Luminophors in den anderen Zustand überführt sind.

Konkret kann der Luminophor beim Messen des Lumineszenzlichts bis auf interessierende Messpunkte in einen inaktiven Zustand überführt werden, in dem er kein Lumineszenzlicht emittiert. Wenn dies durch einen bis zur Sättigung angeregten Übergang zwischen den Zuständen des Luminophors erfolgt, wobei die Anregung des Übergangs nur an dem jeweils interessierenden Messpunkt eine Nullstelle aufweist, kann eine ganz erhebliche Steigerung der räumlichen Auflösung beim Messen des Lumineszenzlichts erzielt werden. Insbesondere kann der Luminophor durch stimulierte Emission aus einem zuvor angeregten Zustand bis auf die interessierenden Messpunkte in einen inaktiven Zustand überführt werden, so dass er nur in den interessierenden Messpunkten in dem angeregten Zustand verbleibt und aufgefangenes Lumineszenzlicht so nur aus diesen interessierenden Messpunkten stammen kann. Dasselbe Ergebnis wird erzielt, wenn der Fluoreszenzfarbstoff überall außerhalb des Messpunkts in einen überhaupt nicht lumineszenzfähigen Zustand überführt wird.

Eine erhöhte räumliche Auflösung ist auch durch eine inverse Überführung des Luminophors überall außerhalb der jeweils interessierenden Messpunkte in einen aktiven Zustand möglich.

Das interessierende Signal mit der erhöhten räumlichen Auflösung ist dann das reduzierte oder sogar ganz fehlende Lumineszenzlicht aus den Messpunkten.

Die Oberfläche der freien Struktur kann bei dem neuen Verfahren mit dem Luminophor in einer Flächenkonzentration zwischen 10⁸ mm-² und 10¹⁵ mm⁻², vorzugsweise in einer Flächenkonzentration von 10¹¹ mm⁻² und 10¹² mm⁻², belegt werden. Mit diesen dimensionslosen Angaben wird die Flächenkonzentration der lumineszierenden Zentren des Luminophors angegeben. D. h. bei einem üblichen Luminophor, der aus einzelnen Molekülen besteht, die jeweils ein lumineszierendes Zentrum aufweisen, geben die Flächenkonzentrationen die Anzahl der Moleküle pro mm² an. Der bevorzugte Bereich der Flächenkonzentration von 10¹¹ bis 10¹² mm² entspricht etwa einer Monolage eines typischen Fluoreszenzfarbstoffs als Luminphor mit typischer Molekülgröße von 0.5-2 nm. Bereits in dieser Flächenkonzentration besteht die Neigung von Luminophoren, statt Lumineszenzlicht zu emittieren, ihre latente Energie an benachbarte Luminophormoleküle abzugeben. D. h., eine darüber hinausgehende Flächenkonzentration des Luminophors führt nicht unbedingt zu einer Steigerung der beobachtbaren Emission von Lumineszenzlicht. Sie stellt aber eine Reserve an Luminophormoleküle dar, die aktiviert wird, wenn der Luminophor in Folge der Einwirkung des optischen Signals, mit dem er zwischen seinem einen in seinem anderen Zustand überführbar ist, oder des Anregungslichts, mit dem er in einen angeregten Zustand, aus dem heraus er Lumineszenzlicht emittiert, angeregt wird, als an sich unerwünschte Nebenwirkung gebleicht, d. h. inaktiv wird. Ein solches Ausbleichen kann auch auf andere Ursachen zurückgehen und ist eine für Luminophore gewöhnliche Eigenschaft, deren Auswirkungen aber durch einen Überschuss an Luminophor auf der Oberfläche der Feinstruktur so weit vorgebeugt werden kann, dass beim Messen des Lumineszenzlichts von dem Luminophor über lange Zeit der interessierende Verlauf der Oberfläche mit hoher räumlicher Auflösung bestimmbar ist.

Die Oberfläche der Feinstruktur kann beispielsweise durch Bedampfen mit dem Luminophor belegt werden. Es ist aber auch denkbar, dass der Luminophor beispielsweise mit einer Trägerflüssigkeit auf die Oberfläche aufgebracht wird und diese Trägerflüssigkeit anschließend verdampft wird, wobei der Luminophor zurückbleibt.

Das neue Verfahren kann bei der Herstellung verschiedener künstlicher Feinstrukturen angewendet werden. Dabei kann die Feinstruktur eine Feinstruktur sein, die als solche bei einem Endprodukt beispielsweise der Mikroelektronik vorhanden ist. So kann die Feinstruktur zum Beispiel selbst Leiterbahnen ausbilden. Bei der Feinstruktur kann es sich aber auch um eine temporäre Struktur handeln, wie beispielsweise eine Maske, die anschließend zur Herstellung einer zu ihr komplementären weiteren Feinstruktur verwendet wird und die dann wieder entfernt wird, so dass sie selbst bei dem entsprechenden Endprodukt nicht mehr vorhanden ist.

Ein konkreter Anwendungsbereich des neuen Verfahrens ist die lithographische Herstellung räumlicher Feinstrukturen. Hierbei wird von einem strahlungsempfindlichen Material ausgegangen und zum Ausbilden der Feinstruktur wird eine Schicht aus dem Material auf ein Substrat aufgetragen, die aufgetragene Schicht in definierten räumlichen Bereichen bestrahlt wird und die bestrahlten Schicht entwickelt, wobei Teile der Schicht entfernt werden und die gewünschte Feinstruktur zurückbleibt. Beim Entwickeln der Schicht können deren bestrahlten oder deren nicht bestrahlten räumlichen Bereiche entfernt werden.

Das strahlungsempfindliche Material kann z. B. gegenüber UV-Strahlung und/oder Röntgenstrahlung und/oder Elektronenstrahlung empfindlich sein, wobei eine dieser Strahlungsarten zum Bestrahlen der aufgetragenen Schicht in den definierten räumlichen Bereichen verwendet wird.

Wenn hier von der lithographischen Herstellung von Feinstrukturen die Rede ist, ist damit normalerweise ein photolithographisches Verfahren gemeint. Die allgemeinere Angabe ohne den Bestandteil "photo" wird jedoch bewusst verwendet, um einen Elektronenstrahl oder einen anderen Teilchenstrahl, der nicht unter den Oberbegriff der Photolithographie fallen würde, für die Bestrahlung des strahlungsempfindlichen Materials ausdrücklich nicht auszuschließen.

Ein besonderer Vorteil des neuen Verfahrens besteht darin, dass der Luminophor nach dem Bestimmen des Verlaufs der mit ihm markierten Oberfläche der räumlichen Feinstruktur wieder von der Oberfläche der Feinstruktur entfernt werden kann. So kann die untersuchte Feinstruktur bis zu einem Endprodukt weiterverarbeitet werden. Mit anderen Worten kann das neue Verfahren an einer Feinstruktur angewendet werden, die sich als solche an einem tatsächlichen Endprodukt wieder findet. Je nach Art der Feinstruktur kann auch auf das Entfernen des Luminophors verzichtet werden, weil er die Weiterverarbeitung der Feinstruktur nicht behindert; oder er kann gezielt gebleicht werden, wenn er derart inaktiviert für die Weiterverarbeitung der Feinstruktur unbedenklich ist.

Beispielsweise kann der Luminophor mit einer Waschflüssigkeit von der Feinstruktur abgewaschen werden. Hierbei handelt es sich, wie für den Fachmann offensichtlich ist, um eine Waschflüssigkeit, die den Luminophor beispielsweise durch Lösen desselben besonders gut aufnimmt, aber die Feinstruktur, auf der sich der Luminophor befindet, unbeeinträchtigt lässt.

Beim mikroskopischen Untersuchen der Feinstruktur kann das von dem Luminophor emittierte Lumineszenzlicht in vorteilhafter Weise mit einem Immersionsobjektiv auf einen Detektor abgebildet werden. Die mikroskopische Untersuchung der Schicht auf der Basis des Lumineszenzlichts ist nicht auf einen Brechungsindexunterschied zwischen der Feinstruktur und dem an sie angrenzenden Medium angewiesen. Die Feinstruktur der Schicht wird nicht direkt, d. h. als solche bei dem neuen Verfahren abgebildet, sondern es wird die räumliche Verteilung des von dem Luminophor emittierten Lumineszenzlichts erfasst, woraus ein Rückschluss auf die Feinstruktur möglich ist. Durch die Verwendung eines Immersionsobjektivs mit einem Immersionsmedium, dessen Brechungsindices dem Brechungsindex der Feinstruktur möglichst nahe kommt, können die optischen Verhältnisse für eine hohe räumliche Auflösung optimal eingestellt werden.

In besonders vorteilhafter Weise wird bei dem Verfahren als Immersionsmedium für das Immersionsobjektiv ein Festkörper verwendet, um jede Gefahr zu vermeiden, bereits mit einer Immersionsflüssigkeit den Luminophor von der Oberfläche der Feinstruktur abzunehmen. Konkret kann der als Immersionsmedium dienende Festkörper eine sogenannte solid immersion lens sein. Eine solid immersion lens weist bei einer Anlage an der mit dem Luminophor belegten Oberfläche der Feinstruktur eine ausreichende Tiefenschärfe über die Kontur der Feinstruktur hinweg auf, um die Verteilung des Luminophors in dieser Tiefenrichtung mit der gewünschten hohen räumlichen Auflösung erfassen zu können.

Das neue Verfahren kommt vollständig ohne das Einbringen der Feinstruktur in eine Hochvakuumapparatur aus. Es schafft damit hervorragende Voraussetzungen dafür, mit vertretbarem Aufwand eine große Anzahl von Feinstrukturen mikroskopisch zu untersuchen. Beim Messen des von dem Luminophor emittierten Lumineszenzlichts sind durch die hier beschriebenen auflösungssteigernden Maßnahmen räumliche Auflösungen möglich, mit denen auch periodische Linienstrukturen von 80 nm Breite und 40 nm Abstand oder noch feinerem Aufbau mit Lumineszenzlicht und optischen Signalen im sichtbaren Bereich analysiert werden können.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand eines in den Figuren dargestellten bevorzugten Ausführungsbeispiels weiter erläutert und beschrieben.
- **Fig. 1**: zeigt ein Ablaufdiagram zur Durchführung des neuen Verfahrens; und
- **Fig. 2**: zeigt den prinzipiellen Aufbau eines bei dem Verfahren gemäß Fig. 1 einsetzbaren Fluoreszenzmikroskops.

### FIGURENBESCHREIBUNG

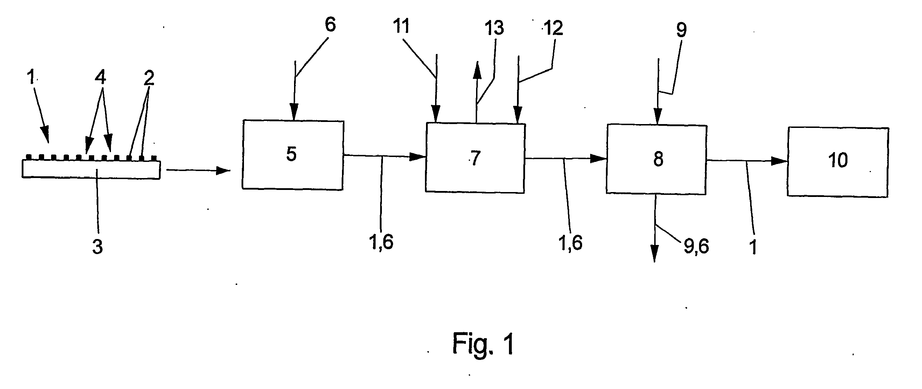

**Fig. 1** skizziert ein Verfahren zur mikroskopischen Untersuchung einer räumlichen Feinstruktur 1, die als Muster linienförmiger Erhebungen 2 über einem Substrat 3 angedeutet ist. Die Feinstruktur 1 kann das Ergebnis eines hier nicht näher dargestellten lithographischen Prozesses sein. Für die mikroskopische Untersuchung wird die Oberfläche 4 der Feinstruktur 1 in einem Verfahrensschritt 5 mit einem Luminophor 6 belegt. Dazu kann der Luminophor 6 verdampft werden, so dass er sich gleichmäßig verteilt auf der Oberfläche 4 niederschlägt. Anschließend wird die mit dem Luminophor 6 belegte Feinstruktur 1 in einem Verfahrensschritt 7 mikroskopisch untersucht. Dabei wird der Luminophor 6, bei dem es sich um einen FluoreszenzfiarbstofF handelt, durch einen Anregungslichtstrahl 11 zu Fluoreszenz angeregt, aber bis auf die jeweils interessierenden Messpunkte mit einem Abregungslichtstrahl 12 durch stimulierte Emission wieder abgeregt. Gemessen wird nur Fluoreszenzlicht 13, das aus dem verbleibenden angeregten Bereich um die interessierenden Messpunkte stammt. Nach dem Verfahrensschritt 7 der mikroskopischen Untersuchung wird in einem Verfahrensschritt 8 der Luminophor 6 von der Feinstruktur 1 mit einer Waschflüssigkeit 9 abgewaschen. Die von dem Luminophor 6 gereinigte Feinstruktur 1 kann in einem nachfolgenden Verfahrensschritt 10 ohne Beeinträchtigung durch die zuvor durchgeführten Verfahrensschritt 5, 7 und 8 weiterverarbeitet werden.

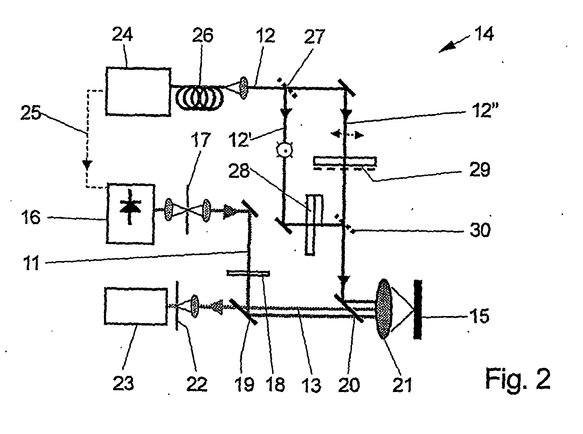

**Fig. 2** zeigt den prinzipiellen Aufbau eines Fluoreszenzmikroskops 14, das bei dem in Figur 1 skizzierten Verfahren eingesetzt werden kann. Das Fluoreszenzmikroskop 14 weist zum Anregen des Fluoreszenzfarbstoffs in einer Probe 15 eine Anregungslichtquelle 16 auf, bei der es sich um eine gepulste Laserdiode (PicoQuant GmbH, Deutschland) handelt, die den Anregungslichtstrahl 11 mit einer Wellenlänge von 635 nm in 68 ps Pulsen mit einer Wiederholungsrate von 80 MHz abgibt. Der Anregungslichtstrahl 11 wird von der Anregungslichtquelle 16 aus durch eine Lochblende 17 geführt und gelangt dann durch eine Lambda-Viertel-Platte, die dazu führt, dass der Anregungslichtstrahl 11 zirkular polarisiert wird. Nach Ablenkung durch einen dichroitischen Spiegel 19 gelangt der Anregungslichtstrahl 11 durch einen weiteren dichroitischen Spiegel 20 in ein Objektiv 21 und wird von diesem in die Probe 15 fokussiert. Das Objektiv 21 ist hier ein Festkörperimmersionsobjektiv. Die dichroitischen Spiegel 19 und 20 und weitere nicht dargestellte Filter sind auf die Wellenlänge des Anregungslichtstrahls 11 von 635 nm und einen Emissionsbereich des Fluoreszenzfarbstoffs in der Probe 15 von 650 bis 710 nm abgestimmt, wobei dies die Charakteristika des Xanthen-Fluoreszenzfarbstoffs JA 26 sind. Fluoreszenzlicht 13 aus der Probe wird durch das Objektiv 21 eingefangen und auf eine Lochblende 22 vor einem Photodetektor 23 abgebildet. Die Lochblende 22 ist in Bezug auf die Lochblende 17 im Strahlengang des Anregungslichtstrahls 11 konfokal angeordnet. Die Lochblende 22 und der Photodetektor 23 können durch eine Lichtleiterfaser, die das Licht zu einer zählenden Lawinenphotodiode leitet, realisiert sein. Dabei kann der Kerndurchmesser der Lichtleiterfaser bei Abbildung in die Brennebene des Objektivs 21 dem 0,7-fachen der Airy-Scheibe entsprechen.

Dieser Aufbau eines konfokalen Fluoreszenzmikroskops ist um folgende Bestandteile zu einem STED-Fluoreszenzmikroskop erweitert, wobei bereits der dichroitische Spiegel 20 dieser Erweiterung zuzurechnen ist. Bei einem STED-Mikroskop werden durch Entvölkern des angeregten Zustands des Fluoreszenzfarbstoffs mittels stimulierter Emission (STimulated Emission Depletion) in allen Bereichen außerhalb eines interessierenden Messpunkts, die Abmessungen des Volumens, in dem der Fluoreszenzfarbstoff noch angeregt ist, so dass er Fluoreszenzlicht 13 emittieren kann, reduziert. Für den entsprechenden Abregungslichtstrahl 12 weist das Fluoreszenzmikroskop 14 eine Abregungslichtquelle 24 auf, bei der es sich hier um einen im Femtosekundenbereich phasengekoppelten Ti:Saphirlaser (Mai Tai, Spectra Physics) handelt, der den Abregungslichtstrahl 12 mit einer Wellenlänge von 780 nm abgibt und gleichzeitig über ein Triggersignal 25 als Taktgeber für die Anregungslichtquelle 16 dient. Die von der Abregungslichtquelle 24 abgegebenen rotverschobenen Pulse werden durch eine Einmodenfaser von 100 m Länge geleitet, um sie auf eine Pulsdauer von 300 ps zu strecken. Damit sind die Pulse des Abregungslichtstrahls 12 deutlich länger als diejenigen des Anregungslichtstrahls 11 von 68 ps. Auf diese Weise ist eine unerwünschte Anregung des Fluoreszenzfarbstoffs, die nicht wieder abgeregt wird, ausgeschlossen. Die Einmodenfaser 26 lässt die Polarisierung des Abregungslichtstrahls 12 unbeeinträchtigt, der anschließend durch einen polarisierenden Strahlteiler 27 in zwei Teilstrahlen 12' und 12" mit zueinander senkrechter s- bzw. p-Polarisation aufgespalten wird. Nach Durchlaufen von Phasenplatten 28 und 29, die die Polarisation der Teilstrahlen 12' und 12" aufeinander abstimmen, werden die Teilstrahlen 12' und 12" durch einen weiteren polarisierenden Strahlteiler 30 wieder so überlagert, dass der mit dem Objektiv 21 in die Probe 15 abgebildete Abregungslichtstrahl 12 einen torusförmigen Bereich um die Strahlrichtung mit Intensität > 0 ausbildet, in dessen Zentrum das Interferenzmuster ein Minimum, d. h. eine Intensität von 0 aufweist. In diesem Bereich wird die Anregung des Fluoreszenzfarbstoffs in der Probe 15 durch den Anregungslichtstrahl 11 nicht wieder abgeregt, während überall außerhalb eine Abregung durch den Abregungslichtstrahl 12 erfolgt. Auf diese Weise kann die laterale Auflösung des Fluoreszenzmikroskops 14 unter die Beugungsgrenze des für die Anregung der Probe verwendeten Anregungslichtstrahls 11 abgesenkt werden. Durch eine entsprechende Intensitätsverteilung des Abregungslichtstrahls in der Strahlrichtung mit Intensitäten > 0 vor und hinter dem interessierenden Messpunkt kann auch die Tiefenauflösung des Fluoreszenzmikroskops 14 abgesenkt werden. Diesbezügliche Details können der WO 02/084265 entnommen werden.

### BEZUGSZEICHENLISTE

- 1: Feinstruktur
- 2: Erhebung
- 3: Substrat
- 4: Oberfläche
- 5: Verfahrensschritt, Belegen
- 6: Luminophor
- 7: Verfahrensschritt, Untersuchen
- 8: Verfahrensschritt, Abwaschen
- 9: Waschflüssigkeit
- 10: Verfahrensschritt, Verarbeiten
- 11: Anregungslichtstrahl
- 12: Abregungslichtstrahl
- 13: Fluoreszenzlicht
- 14: Fluoreszenzmikroskop
- 15: Probe
- 16: Anregungslichtquelle
- 17: Lochblende
- 18: Lambda-Viertel-Platte
- 19: dichroitischer Spiegel
- 20: dichroitischer Spiegel
- 21: Objektiv
- 22: Lochblende
- 23: Photodetektor
- 24: Abregungslichtquelle
- 25: Triggersignal
- 26: Einmodenfaser
- 27: Strahlteiler
- 28: Phasenplatte
- 29: Phasenplatte
- 30: Strahlteiler

## Patentansprüche

1. Verfahren zur mikroskopischen Untersuchung einer räumlichen Feinstruktur mit den Schritten:
- Belegen einer Oberfläche der räumlichen Feinstruktur mit einer Hilfssubstanz und
- Bestimmen des Verlaufs der mit der Hilfssubstanz belegten Oberfläche,
**dadurch gekennzeichnet, dass** als Hilfssubstanz ein Luminophor ausgewählt wird, der zwei Zustände aufweist, die sich in Bezug auf ihre Lumineszenzeigenschaften unterscheiden, wobei der Luminophor reversibel, aber im Wesentlichen vollständig durch ein optisches Signal von dem einen in den anderen Zustand überführbar ist, und dass zum Bestimmen des Verlaufs der mit dem Luminophor belegten Oberfläche von dem Luminophor emittiertes Lumineszenzlicht gemessen wird, wobei der Luminophor in der Umgebung jedes aktuell betrachteten Messpunkts in den anderen seiner beiden Zustände überführt wird.

2. Verfahren nach Anspruch 1, **dadurch gekennzeichnet, dass** der Luminophor durch einen bis zur Sättigung getriebenen Übergang von dem einen in den anderen seiner beiden Zuständen überführt wird.

3. Verfahren nach Anspruch 1 oder 2, **dadurch gekennzeichnet, dass** der Luminophor in der Umgebung jedes aktuell betrachteten Messpunkts in einen inaktiven Zustand überführt wird, in dem er kein Lumineszenzlicht emittiert.

4. Verfahren nach Anspruch 3, **dadurch gekennzeichnet, dass** der Luminophor durch stimulierte Emission in den inaktiven Zustand überführt wird.

5. Verfahren nach einem der Ansprüche 1 bis 4, **dadurch gekennzeichnet, dass** die Oberfläche der Feinstruktur mit dem Luminophor in einer Flächenkonzentration zwischen 10⁸ mm⁻² und 10¹⁵ mm⁻², vorzugsweise in einer Flächenkonzentration von 10¹¹ mm⁻² und 10¹² mm⁻², belegt wird.

6. Verfahren nach einem der Ansprüche 1 bis 5, **dadurch gekennzeichnet, dass** die Oberfläche der Feinstruktur durch Bedampfen mit dem Luminophor belegt wird.

7. Verfahren nach einem der Ansprüche 1 bis 6, **dadurch gekennzeichnet, dass** der Luminophor nach dem Bestimmen des Verlaufs der mit dem Luminophor belegten Oberfläche der räumlichen Feinstruktur wieder von der Oberfläche der Feinstruktur entfernt wird.

8. Verfahren nach Anspruch 7, **dadurch gekennzeichnet, dass** der Luminophor von der Oberfläche der Feinstruktur mit einer Waschflüssigkeit abgewaschen wird.

9. Verfahren nach einem der Ansprüche 1 bis 8, **dadurch gekennzeichnet, dass** von dem Luminophor emittierten Lumineszenzlichts mit einem Immersionsobjektiv auf einen Detektor abgebildet wird.

10. Verfahren nach Anspruch 9, **dadurch gekennzeichnet, dass** als Immersionsionsmedium für das Immersionsobjektiv ein Festkörper, insbesondere eine so genannte solid immersion lens, verwendet wird.

## Claims

1. Method of microscopically examining a spatial fine structure, the method comprising the steps of:
- overlaying a surface of the spatial fine structure with an assistant substance; and
- determining the profile of the surface overlaid with the assistant substance;
**characterized in that** a luminophore is selected as the assistant substance, which has two states differing from each other with regard to their luminescence properties, wherein the luminophore is reversibly, but essentially completely transferable out of the one into the other state by means of an optical signal, and **in that** luminescence light emitted by the luminophore is measured for determining the profile of the surface overlaid with the luminophore, wherein the luminophore is transferred into the other of its two states in the surroundings of each presently observed measurement point.

2. Method of claim 1, **characterized in that** the luminophore is transferred out of the one into the other of its two states by means of a transfer which is driven up to saturation.

3. Method of claim 1 or 2, **characterized in that** the luminophore is transferred into an inactive state in which it does not emit luminescence light in the surroundings of each presently observed measurement point.

4. Method of claim 3, **characterized in that** the luminophore is transferred into the inactive state by means of stimulated emission.

5. Method of any of the claims 1 to 4, **characterized in that** the surface of the fine structure is overlaid with the luminophore at a surface concentration between 10⁸ mm⁻² and 10¹⁵ mm⁻², preferably at a surface concentration between 10¹¹ mm⁻² and 10¹² mm⁻².

6. Method of any of the claims 1 to 5, **characterized in that** the surface of the fine structure is overlaid with the luminophore by means of vapour deposition.

7. Method of any of the claims 1 to 6, **characterized in that** the luminophore is removed from the surface of the fine structure after determining the profile of the surface of the fine structure overlaid with the luminophore.

8. Method of claim 7, **characterized in that** the luminophore is washed away from the surface of the fine structure with a washing solution.

9. Method of any of the claims 1 to 8, **characterized in that** luminescence light emitted by the luminophore is imaged onto a detector by means of an immersion objective.

10. Method of claim 8, **characterized in that** a solid body, particularly a so-called solid immersion lens, is used as an immersion medium for the immersion objective.

## Revendications

1. Procédé d'examen microscopique d'une structure spatiale fine comportant les étapes :
- enduire une surface supérieure de la structure spatiale fine d'une substance auxiliaire et
- déterminer l'allure de la surface supérieure à enduire avec la substance auxiliaire,
**caractérisé en ce qu'**un luminophore est utilisé comme substance auxiliaire, qui présente deux états qui se distinguent en ce qui concerne leurs propriétés de luminescence, le luminophore étant réversible mais pouvant, pour l'essentiel, entièrement passer d'un état à l'autre au moyen d'un signal optique et **en ce que**, pour déterminer l'allure de la surface supérieure enduite avec la substance auxiliaire, on mesure la lumière de la luminescence émise par le luminophore, le luminophores étant amené dans l'autre de ses deux états au voisinage de chaque point de mesure actuel considéré.

2. Procédé selon la revendication 1, **caractérisé en ce que** le luminophore est amené de l'un dans l'autre de ses états par une transition menée jusqu'à saturation.

3. Procédé selon la revendication 1 ou 2, **caractérisé en ce que** le luminophore est amené, au voisinage de chaque point de mesure actuel considéré, dans un état inactif dans lequel il n'émet aucune lumière de luminescence.

4. Procédé selon la revendication 1, **caractérisé en ce que** le luminophore est amené dans l'état inactif au moyen d'une émission stimulée

5. Procédé selon l'une des revendications 1 à 4, **caractérisé en ce que** la surface supérieure de la structure fine est enduite avec le luminophore dans une concentration de surface entre 10⁸ mm⁻² et 10¹⁵ mm⁻², de préférence dans une concentration de surface entre 10¹¹ mm⁻² et 10¹² mm⁻².

6. Procédé selon l'une des revendications 1 à 5, **caractérisé en ce que** la surface supérieure de la structure fine est enduite avec le luminophore par vaporisation.

7. Procédé selon l'une des revendications 1 à 6, **caractérisé en ce qu'**après la détermination de l'allure de la surface supérieure de la structure spatiale fine à enduire avec la substance auxiliaire le luminophore est à nouveau éliminé de la surface supérieure de la structure fine.

8. Procédé selon la revendication 8, **caractérisé en ce que** le luminophore est enlevé par lavage de la surface supérieure de la structure fine au moyen d'une lessive liquide.

9. Procédé selon l'une des revendications 1 à 8, **caractérisé en ce que** les lumières de luminescence émise par le photophore sont reformées sur un détecteur au moyen d'un objectif à immersion.

10. Procédé selon la revendication 9, **caractérisé en ce qu'**on utilise un solide, notamment ce qu'on appelle une lentille solide à immersion, comme milieu d'immersion pour l'objectif à immersion.
